# EUROPEAN PATENT APPLICATION

(11) **EP 4 667 290 A1**
(43) Date of publication of application: **24.12.2025**
(21) Application number: 25182128.6
(22) Date of filing: 11.06.2025
(51) Int. Cl.: B60R 3/02

(54) **STEP OF A VEHICLE**

(30) Priority: 18.06.2024 IT 202400013981
(71) Applicant: LCI Italy S.r.l., 50026 San Casciano in Val di Pesa (FI) (IT)
(72) Inventor: Gozzi, Luigi, San Gimignano (SI) (IT); Romagnoli, Fabio, Greve in Chianti (FI) (IT)
(74) Representative: Firmati, Leonardo

(57) **Abstract**

A step (1) of a vehicle, comprising a fixed portion (2) suitable for permanently connecting to said vehicle, at least one platform (3) movable, extendablebetween a retracted position, wherein said movable platform (3) is collected in proximity to said fixed portion (2) to an extracted position, wherein said movable platform (3) projects outside said fixed portion (2), a motor (5) for driving said connecting and movement means (4), a battery (6) for supplying said motor (5), and a source (7) of renewable energy connected to said power supply battery (6).

## Description

The present invention relates to a step of a vehicle. In particular, the present invention relates to a step of the type installable at an access door of a vehicle, such as a recreational vehicle, and capable of assuming a retracted resting configuration and an extracted configuration for supporting a user wishing to enter or exit the vehicle.

To date, there are various types of vehicle steps. Known steps include a platform suitable for automatically moving from a retracted position to an extracted position.

Such a platform in known steps is generally moved by a motor and guided by a mechanism with pins and arms. The motor of the known steps is powered by wired connection with a vehicle service battery.

Known steps offer a good solution for facilitating a user to get in and out of a given vehicle, however, this solution, is certainly not without its drawbacks. One major drawback of known steps is that they are not always practical to use.

Another drawback of known steps is that they do not always guarantee small overall footprints, for example, due to the wiring required to power them by battery, which (wiring) is often in the way inside the vehicle. Another drawback of known steps is that they do not always turn out to be easy to install or inexpensive to make. Some examples of known steps are given by prior art documents US2023294608 and CN113386810.

Therefore, it is an object of the present invention to make available a step of a vehicle capable of solving the mentioned state of the art drawbacks.

A primary object of the vehicle step according to the present invention is to ensure minimal overall footprint.

A further object of the vehicle step according to the present invention is to enable a solution that is simple and inexpensive to make, as well as practical to install.

A further object of the step of a vehicle according to the present invention is to enable a solution that is as independent as possible and such as to ensure operation that does not require components external to the step itself.

A further object of the step of a vehicle according to the present invention is to ensure a solution that can optimize the support of a user when getting on/off the vehicle itself.

According to the invention, these objects and others are achieved by a step of a vehicle comprising the technical features described in the attached claims. The technical features of the invention, according to the above objects, are clearly described in the attached claims, and its advantages are evident from the detailed description that follows, with reference to the attached drawings illustrating a non-limiting exemplary embodiment, in which:
- Figure 1 illustrates a schematic perspective view from above of a step of a vehicle object of the present invention, according to a first embodiment;
- Figure 2 illustrates a schematic perspective view from above of the step referred to in figure 1, in which some internal components of the step have been made visible;
- Figure 3 illustrates a schematic perspective view from above of a second embodiment of the step being object of the present invention;
- Figure 4 illustrates a schematic perspective view from above of a third embodiment of the step object of the present invention.

With reference to the appended figures, by the reference number 1 is indicated a step of a vehicle according to the present invention, hereafter also referred to simply as step 1.

By vehicle, it is meant any means of transportation on which a step could be installed to facilitate getting in/out of a user.

In particular, the present solution refers to recreational vehicles, i.e., vehicles suitable for recreation and such as to include a living space, such as a van, mini-van, camper, panel van, trailer, caravan, or the like. In such types of recreational vehicles, precisely because they comprise a living space, the need to optimize overall dimensions is particularly felt.

The step 1 that is the object of the present invention includes a fixed portion 2 suitable for connecting stably to the vehicle.

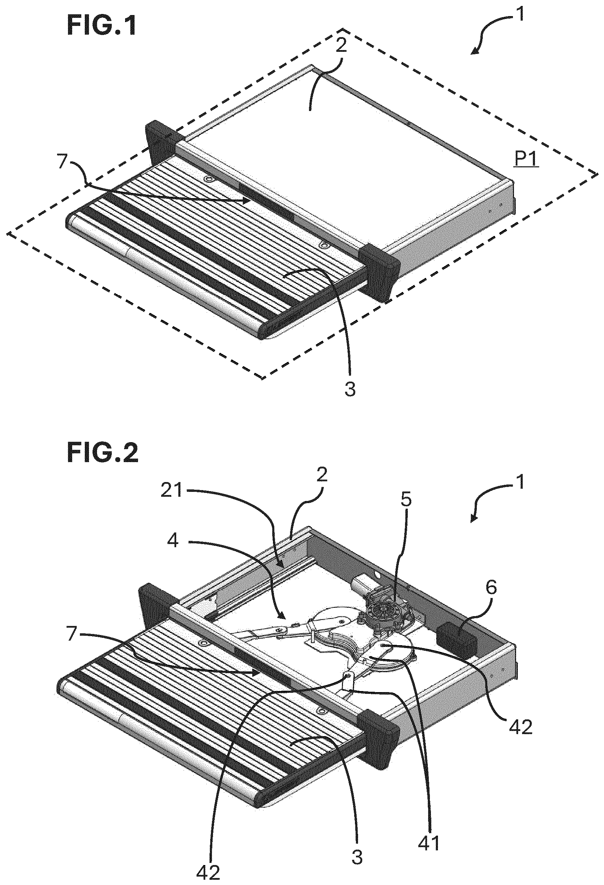

With reference to the embodiment forms illustrated in figures 1-3, the step 1 includes a movable platform 3.

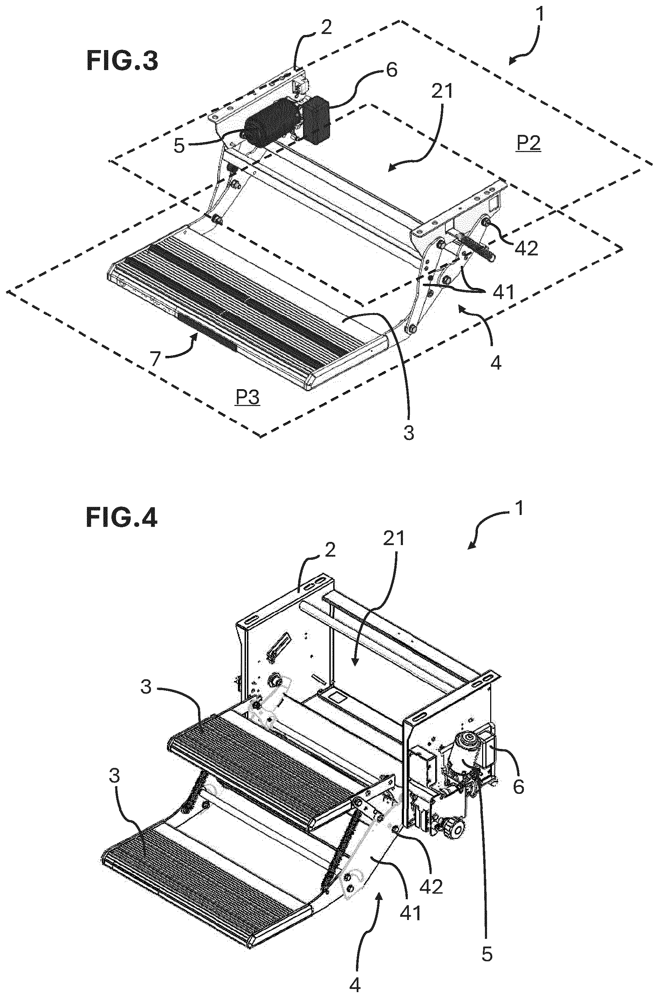

According to the embodiment illustrated in figure 4, the step 1 includes two movable footplates 3 suitable for allowing, when in the extracted position, a convenient and practical entry/exit of a user onto/from the vehicle. According to further embodiments not shown, step 1 comprises three or more movable 3 platforms.

With reference to the attached figures 2-4, step 1 includes connecting and movement means 4 suitable for connecting the movable platform 3 to the fixed portion 2.

Such connecting and movement means 4 also allow the movable platform 3 to be moved between a retracted position and an extracted position.

A retracted position is defined as a position in which the movable platform 3 is gathered near the fixed portion 2. In such a retracted position substantially the movable platform is collected within an overall footprint defined by the fixed portion 2.

An extracted position is defined as a position in which the movable platform 3 projects outside the fixed portion 2.

In such an extracted position, the movable platform 3 projects beyond the footprint defined by the fixed portion 2 and relative to the vehicle itself and defines a stable foothold for a user to get on/off the vehicle. Advantageously, the connecting means 4 comprise a mechanism with pins 42 and arms 41. Advantageously, said connecting and movement means 4 comprise at least two arms 41 and respective connecting pins 42 wherein the pins 42 define respective axes of rotation of the arms 41.

The step 1 object of the present invention includes a motor 5 for driving the connecting and movement means 4.

The step 1 object of the present invention further includes a battery 6 for powering the motor 5.

Said battery 6 is obtained within a footprint volume of the step 1. Essentially, the battery 6 is housed in close proximity to the motor 5 so as to minimize wiring and in particular so as to eliminate the need for external wiring to step 1.

In other words, placing a battery 6 inside step 1 and in close proximity to that motor 5 allows the operation of step 1 itself to be freed from any external power source, such as a vehicle service battery.

This optimizes the footprint within the vehicle's living space, making it more comfortable. The ability to release step 1 from wired connections to external power supplies or batteries avoids the need to cut through holes in the vehicle, which would otherwise be necessary to allow the cables themselves to pass through.

This facilitates the installation of step 1 itself on the vehicle, and keeps the vehicle structure intact. Step 1 also includes means 7 for transforming renewable energy.

Such means 7 are connected to the power supply battery 6 and supply electricity to it.

Advantageously, the means 7 for transforming renewable energy includes a photovoltaic cell.

Basically, according to such an embodiment, the means 7 for transforming renewable energy, transform solar energy into electrical energy so as to ensure the power supply to the battery 6.

According to further embodiments, the means 7 for transforming renewable energy include any technology suitable for harnessing any renewable energy source. For example, according to a further embodiment not illustrated, the means 7 include a mini-wind turbine suitable for transforming wind energy into electrical energy.

Advantageously, the means 7 for transforming renewable energy are obtained on a visible surface of the step 1. A visible surface is defined as a surface section of a portion of the step 1 that extends beyond the vehicle's footprint both when the step 1 (and movable platform 3) is in the extracted position and when it is in the retracted position.

The fact that the aforementioned means 7 for transforming renewable energy are arranged on a surface that is always in view, enables to maximize the capacity for capturing renewable energy during the entire life cycle and use of the step and vehicle.

This allows for optimized reliability and effective energy self-sufficiency of step 1.

This visible surface area can be obtained either on the movable step 3 or on the fixed portion 2.

Essentially, in the embodiment comprising a photovoltaic cell, the latter is housed into an exposed surface such that it is always exposed to light (when it is present) regardless of the usage configuration of step 1.

The presence of the aforementioned means 7 for transforming a renewable energy allows step 1 to be freed from additional components, such as battery chargers, that would otherwise be excessively bulky.

In addition, doing so further optimizes the degree of independence of step 1 from external components. Advantageously, the step 1 object of the present invention, includes control means configured to control the movement of the movable platform 3 from the retracted position to the extracted position and vice versa.

Advantageously, such control means are wireless.

This further limits the presence of wiring inside the vehicle.

However, it is understood that, according to further embodiments, such control means may also provide related wiring.

Advantageously, the fixed portion 2 has an inner compartment 21 configured to at least partially contain the movable platform 3 when it is in the retracted position.

Advantageously, the motor 5 and battery 6 are housed within the inner compartment 21 of the fixed portion 2. This allows for further space optimization.

According to the embodiment illustrated in figures 1 and 2, the movable platform 3 is movable between the mentioned extracted and retracted positions by translation in a plane P1.

According to the embodiment illustrated in figure 3, the movable platform 3 is movable by roto-translation between a first plane P2 in which the movable platform is in the retracted position, and a second plane P3 in which the movable platform 3 is in the extracted position.

A similar type of movement is also applied in the embodiment shown in figure 4, in which there are 2 movable platforms 3.

The step of a vehicle object of the present invention solves the drawbacks of the state of the art and achieves important advantages.

A first advantage of the step object of the present invention is that it provides a reliable and practical solution.

Another advantage of the step object of the present invention is that it ensures a solution that is substantially independent of physical connections to external components.

This allows to optimize overall footprints and operation of the step itself.

The limitation of wiring also allows to optimize the habitability of the vehicle, making it more comfortable for a user.

Another advantage of the step object of the present invention is that it ensures an optimized visual impact.

A further advantage of the step object of the present invention is that it ensures a simple and practical installation solution.

In fact, thanks to the absence of wired connections to the outside, the step object of the present invention does not require the creation of through holes (generally suitable for ensuring the passage of such cables, as is the case with the known art) on the structure of the vehicle, thus optimizing the installation operations (of the step) and ensuring the maintenance of the vehicle structure in an optimal state.

## Claims

1. A step (1) of a vehicle, comprising:
- a fixed portion (2) designed to stably connect to said vehicle,
- at least one movable platform (3),
- connecting and movement means (4) designed to connect said movable platform (3) to said fixed portion (2) and to move said platform (3) between a retracted position in which said movable platform (3) is collected close to said fixed portion (2) to an extracted position in which said movable platform (3) projects outside said fixed portion (2),
- a motor (5) for driving said connecting and movement means (4),
- a battery (6) for powering said motor (5), said battery(6) being located inside a space of said step (1);
- means (7) for transforming renewable energy, said means (7) being connected to said power supply battery (6) and to supply electricity to it, said means (7) for transforming a renewable energy being obtained on a visible surface of said step (1), said visible surface defining a surface section of a portion of said step (1) suitable for emerging from a footprint of said vehicle both when said movable platform (3) is in said extracted position and when said movable platform (3) is in said retracted position.

2. The step (1) according to any of the preceding claims, **characterized in that** said means (7) for transforming renewable energy comprises a photovoltaic cell.

3. The step (1) according to any of the preceding claims, **characterized by** comprising control means configured to control the movement of said movable platform (3) from said retracted position to said extracted position and vice versa.

4. The step (1) according to the preceding claim, **characterized in that** said control means is wireless.

5. The step (1) according to any of the preceding claims, **characterized in that** said connecting and movement means (4) includes a mechanism with pins (42) and arms (41).

6. The step (1) according to any of the preceding claims, **characterized in that** said fixed portion (2) has an inner compartment (21) configured for containing at least partly said movable platform (3) when said movable platform (3) is in a retracted position.

7. The step (1) according to the preceding claim, **characterized in that** said motor (5) and said battery (6) are housed inside said compartment (21) inside said fixed portion (2).

8. The step (1) according to any of the preceding claims, **characterized in that** said movable platform (3) can be moved between said extracted position and said retracted position by translating on a plane (P1).

9. The step (1) according to any of the preceding claims 1 to 7, **characterized in that** said movable platform (3) can be moved by means of roto-translation between a first plane (P2) in which said movable platform (3) is in said retracted position, and a second plane (P3) in which said movable platform (3) is in said extracted position.
